Europäisches Patentamt

European Patent Office

Office européen des brevets

(11) Publication number: **0 080 872**
**B1**

# (12) EUROPEAN PATENT SPECIFICATION

(45) Date of publication of patent specification: **27.08.86**

(51) Int. Cl.⁴: **F 16 B 33/02, E 04 G 7/00**

(21) Application number: **82306308.6**

(22) Date of filing: **26.11.82**

(54) **Threaded scaffolding members.**

(30) Priority: **02.12.81 GB 8136556**

(43) Date of publication of application:
**08.06.83 Bulletin 83/23**

(45) Publication of the grant of the patent:
**27.08.86 Bulletin 86/35**

(84) Designated Contracting States:
**AT BE CH DE FR IT LI LU NL SE**

(56) References cited:
**CH-A- 389 327**
**GB-A-1 399 713**
**US-A-3 433 117**

(73) Proprietor: **Garton Engineering Public Limited Company**
**Bridge Works Bilport Lane**
**Wednesbury West Midlands (GB)**

(72) Inventor: **Bourne, Roderick Harvey**
**15 Ellesmere Court**
**Newport Shropshire TF10 7SD (GB)**

(74) Representative: **Lomas, Geoffrey Michael et al**
**BARKER, BRETTELL & DUNCAN**
**138 Hagley Road Edgbaston**
**Birmingham B16 9PW (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 080 872 B1

# 0 080 872

**Description**

This invention relates to improvements in threaded scaffolding members such as scaffolding bolts, or any threaded members employed in scaffold couplings, clamps, props, jacks etc.

Threaded members employed in scaffolding need to be reliable and safe in operation, yet withstand damage and clogging of the threads by concrete.

One attempt to provide a suitable thread is disclosed in GB—A—1 399 713 where it was proposed to employ a relatively shallow thread form in which the crest and root of the thread are of relatively large radius.

We consider it important that a suitable thread should provide a locking action, that is the resistance to rotation should increase suddenly, rather than progressively over a period which would give rise to the danger of the threaded members or parts attached thereto being overstressed. For example if a Whitworth thread is employed on the bolt of a scaffolding clamp it is always possible to continue tightening the bolt with the result that the clamp is ultimately overstressed and may fail.

Bolts in accordance with GB—A—1 399 713 have been found to resist unlocking, but we believe that the resistance to unlocking is associated with a partial stripping of the threads which might possibly lead over a long period to failure of the threaded connection, particularly if the manufacturing tolerances are not closely controlled.

We have found that a thread form having an angle of 90° provides a locking action rather than a relatively progressive tightening up.

The invention provides threadedly interengageable metallic scaffolding members having a thread with substantially flat side faces of equal flank angles characterised in that said side faces subtend an angle of between substantially 85° and substantially 95°.

Preferably the subtended angle is substantially 90°.

Preferably the radii of the crowns and troughs are less than 0.4 times the depth of the thread.

Such a thread form is more open than a Whitworth thread and is therefore less susceptible to clogging but the threads may have a substantial radial depth to resist stripping.

The thread forms of both the male and female threaded members are preferably identical with a uniform clearance being provided between the various parts of the adjacent thread profiles.

Such a thread should be capable of substantially withstanding bruising in use.

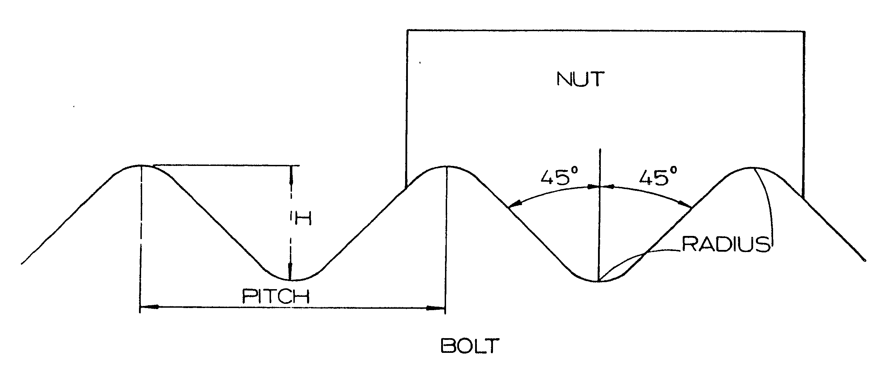

The accompanying drawing shows a preferred thread form for a scaffolding nut and bolt, and the table gives preferred dimensions of the threads (TPI = threads per inch) for some diameters of bolt.

It will be seen from the drawing that the thread form has flat side faces of substantial radial extent connected together by crowns and troughs which are both of substantially small radius in order to maximise the extent of the flat side faces, the crowns and troughs merging tangentially with the side faces.

The thread depth is approximately 0.375 times the pitch.

TABLE

| DIAMETER | T.P.I. | PITCH | THREAD DEPTH H | RADIUS |
|---|---|---|---|---|
| (INCHES) | (THREADS PER INCH) | (INCHES) | (INCHES) | (INCHES) |
| 1/2—5/8 | 8 | 0.125 | 0.047 | 0.017 |
| 3/4—7/8 | 7 | 0.1428 | 0.0535 | 0.020 |
| 1—1 1/8 | 6 | 0.1666 | 0.0625 | 0.023 |
| 1 1/4—1 1/2 | 5 | 0.2000 | 0.075 | 0.027 |
| (1 inch ≙ 25,4 mm) | | | | |

**Claims**

1. Threadedly interengageable metallic scaffolding members having a thread with substantially flat side faces of equal flank angles characterised in that said side faces subtend an angle of between substantially 85° and substantially 95°.

2. Members as claimed in claim 1 in which said angle is substantially 90°.

3. Members as claimed in claim 1 or claim 2 in which the radii of the crowns and troughs are less than 0.4 times the depth of the thread.

4. Members as claimed in any of the preceding claims in which the thread forms of both the male and

2

**0 080 872**

female threaded members are identical with a uniform clearance being provided between the various parts of the adjacent thread profiles.

5. A scaffolding device incorporating members as claimed in any of the preceding claims.

**Patentansprüche**

1. Über ein Gewinde aneinander zum Eingriff bringbare metallische Gerüstbauteile mit einem Gewinde mit im wesentlichen ebenen Flanken und gleichen Flankenwinkeln, dadurch gekennzeichnet, daß die Flanken einen Winkel zwischen etwa 85° und etwa 95° einschließen.

2. Gerüstbauteile nach Anspruch 1, bei welchen der Winkel etwa 90° beträgt.

3. Gerüstbauteile nach Anspruch 1 oder 2, bei welchen die Radien der Scheitel und des Gewindegrundes weniger als das 0,4-fache der Gewindetiefe betragen.

4. Gerüstbauteile nach einem der vorangehenden Ansprüche, bei welchen die Gewindeformen der das Außengewinde und das Innengewinde tragenden Bauteile identisch sind und zwischen den verschiedenen Teilen der einander benachbarten Gewindeprofile ein gleichmäßiges Spiel besteht.

5. Ein Gerüst mit Gerüstbauteilen nach einem der vorangehenden Ansprüche.

**Revendications**

1. Eléments métalliques pour échafaudage pouvant engrener réciproquement par vissage et comportant un filetage muni de faces latérales essentiellement planes comportant des angles de pression identiques, caractérisé en ce que lesdites faces latérales sous-tendent un angle compris entre essentiellement 85° et essentiellement 95°.

2. Eléments selon la revendication 1, dans lequel ledit angle est égal essentiellement à 90°.

3. Eléments selon la revendication 1 ou 2, dans lequel les rayons des sommets et des parties en creux sont inférieurs à 0,4 fois la profondeur du filetage.

4. Eléments selon l'une quelconque des revendications précédentes, dans lesquels les formes de filetage à la fois de l'élément fileté extérieurement et de l'élément taraudé sont identiques, avec un jeu uniforme prévu entre les différentes parties des profils de filetage adjacents.

5. Système d'échafaudage comportant des éléments tels que revendiqués dans l'une quelconque des revendications précédentes.

3

NUT

45° 45°

H

RADIUS

PITCH

BOLT

0 080 872